# EUROPÄISCHE PATENTSCHRIFT

(11) **EP 2 441 634 B1**
(45) Veröffentlichungstag und Bekanntmachung des Hinweises auf die Patenterteilung: **05.08.2020**
(21) Anmeldenummer: 11007159.4
(22) Anmeldetag: 03.09.2011
(51) Int. Cl.: B60W 30/18, B60W 50/14

(54) **FAHRERASSISTENZSYSTEM UND ENTSPRECHENDES BETRIEBSVERFAHREN ZUR ANZEIGE ODER MITTEILUNG EINER KRAFTSTOFFEINSPARUNGSSITUATION ZUR SENKUNG DES KRAFTSTOFFVERBRAUCHS EINES KRAFTFAHRZEUGS**
DRIVER ASSISTANCE SYSTEM AND OPERATING METHOD FOR DISPLAYING OR COMMUNICATING A FUEL SAVING SITUATION TO REDUCE THE FUEL CONSUMPTION OF A MOTOR VEHICLE
SYSTÈME D'ASSISTANCE DU CONDUCTEUR ET PROCÉDÉ DE FONCTIONNEMENT CORRESPONDANT POUR L'AFFICHAGE OU LA SIGNALISATION D'UNE SITUATION D'ÉCONOMIE DE CARBURANT DESTINÉ À RÉDUIRE LA CONSOMMATION EN CARBURANT D'UN VÉHICULE AUTOMOBILE

(30) Priorität: 13.10.2010 DE 102010048323
(43) Veröffentlichungstag der Anmeldung: 18.04.2012
(73) Patentinhaber: MAN Truck & Bus SE, 80995 München (DE)
(72) Erfinder: Dörner, Karlheinz, 85757 Karlsfeld (DE); Zimmermann, Andreas, 80995 München (DE); Heyes, Daniel, 80687 München (DE); Huber, Martin, 81243 München (DE); Drimml, Peter, 85221 Dachau (DE); Michel, Britta, 81675 München (DE)
(74) Vertreter: v. Bezold & Partner Patentanwälte - PartG mbB

(56) Entgegenhaltungen:
- WO-A1-2010/059109
- WO-A1-2010/081836
- DE-A1-102008 005 328
- DE-A1-102008 035 944
- FR-A1- 2 917 690
- GB-A- 2 452 579
- US-A1- 2009 157 290

## Beschreibung

Die Erfindung betrifft ein Betriebsverfahren zur Anzeige oder Mitteilung einer Kraftstoffeinsparungssituation für ein Fahrerassistenzsystem zur Unterstützung des Fahrzeugführers eines Kraftfahrzeugs, insbesondere eines Lastkraftwagens, bei der Senkung des Kraftstoffverbrauchs des Kraftfahrzeugs. Weiterhin betrifft die Erfindung ein entsprechendes Fahrerassistenzsystem.

Aus DE 10 2009 007 532 A1 ist ein Fahrerassistenzsystem für einen Lastkraftwagen (Lkw) bekannt, wobei das Fahrerassistenzsystem zum einen den aktuellen Kraftstoffverbrauch darstellt und zum anderen einen Vergleichswert anzeigt, der bei sparsamer Fahrweise erreichbar ist. Der Fahrzeugführer kann somit erkennen, wenn sein individueller Fahrstil zu einem Mehrverbrauch führt, wodurch der Fahrzeugführer zu einer kraftstoffsparenden Fahrweise angehalten wird.

Weiterhin ist aus DE 10 2008 045 811 A1 ein Fahrerassistenzsystem bekannt, das ebenfalls zur Senkung des Kraftstoffverbrauchs dient. Zum einen wird hierbei der zeitliche Verlauf des tatsächlichen Kraftstoffverbrauchs grafisch dargestellt. Zum anderen wird hierbei aber auch ein zeitlicher Verlauf eines hypothetischen Kraftstoffverbrauchs dargestellt, der bei sparsamer Fahrweise realisierbar ist. Der Fahrzeugführer sieht also unmittelbar die Differenz zwischen dem tatsächlichen Kraftstoffverbrauch auf der gesamten Strecke und dem bei sparsamer Fahrweise erreichbaren Kraftstoffverbrauch, wodurch der Fahrzeugführer ebenfalls zu einer sparsamen Fahrweise angehalten wird.

Die beiden vorstehend genannten Veröffentlichungen betreffen jedoch im Wesentlichen nur die Visualisierung des tatsächlichen Kraftstoffverbrauchs im Vergleich zu einem optimalen Kraftstoffverbrauch, der bei sparsamer Fahrweise erreichbar ist. Eine Fahrempfehlung bzw. Anzeige einer Kraftstoffeinsparungssituation wird hierbei jedoch nicht abgegeben.

Darüber hinaus ist aus DE 10 2009 031 085 A1 ein Fahrerassistenzsystem bekannt, das eine konkrete Fahrempfehlung zur Senkung des Kraftstoffverbrauchs abgibt. Zum einen berücksichtigt das Fahrerassistenzsystem hierbei den stark nicht-linearen geschwindigkeitsabhängigen Kraftstoffverbrauch und zum anderen den Zeitmehraufwand, der durch eine sparsame, aber langsame Fahrweise verursacht wird. Das Fahrerassistenzsystem gibt dann als Fahrempfehlung einen Kompromiss aus zwischen einer möglichst schnellen Fahrgeschwindigkeit mit einem hohen Kraftstoffverbrauch einerseits und einer möglichst sparsamen Fahrgeschwindigkeit mit einem hohen Zeitmehraufwand andererseits. Bei der Bestimmung der Fahrempfehlung werden jedoch keine Straßeneigenschaften auf der bevorstehenden Fahrtroute berücksichtigt.

Aus GB 2 452 579 A sind ein Betriebsverfahren gemäß dem Oberbegriff von Anspruch 1 und ein Fahrerassistenzsystem gemäß dem Oberbegriff von Anspruch 12 bekannt. Hierbei ist die Darstellung der Fahrempfehlung für den Fahrzeugführer jedoch noch nicht befriedigend.

Zum allgemeinen technischen Hintergrund der Erfindung wird auch hingewiesen auf DE 10 2008 035 944 A1, WO 2010/059109 A1, FR 2 917 690 A1 und US 2009/157290 A1.

Der Erfindung liegt deshalb die Aufgabe zugrunde, ein entsprechend verbessertes Fahrerassistenzsystem und ein entsprechendes Betriebsverfahren zu erschaffen. Vorzugsweise liegt der Erfindung auch die Aufgabe zugrunde, eine Fahrempfehlung und ein entsprechendes Betriebsverfahren so zu gestalten, dass dem Fahrzeugführer aufgezeigt wird, wann und warum die Fahrempfehlung angezeigt oder ausgeführt wird. Er wird damit das Fahrerassistenzsystem besser und schneller verstehen, akzeptieren und lernen, welche Fahrweise kraftstoffsparend ist.

Diese Aufgabe wird durch ein Fahrerassistenzsystem und ein entsprechendes Betriebsverfahren gemäß den Nebenansprüchen gelöst.

Die Erfindung beruht auf der technischen Erkenntnis, dass die optimale Fahrgeschwindigkeit zur Senkung des Kraftstoffverbrauchs von den verbrauchsrelevanten Straßeneigenschaften auf der bevorstehenden Fahrtroute des Kraftfahrzeugs abhängt. Falls beispielsweise ein Lastkraftwagen über eine Kuppe fährt, so führt die Steigung vor der Kuppe zu einem erheblichen Kraftstoffmehrverbrauch, wenn der Fahrzeugführer versucht, die Fahrgeschwindigkeit unverändert beizubehalten. In dem anschließenden Gefälle hinter der Kuppe könnte der Lastkraftwagen aufgrund der Hangabtriebskraft zwar seine Fahrgeschwindigkeit erhöhen, ohne dass dies zu einem Mehrverbrauch führen würde. Dies ist jedoch nicht möglich, wenn der Lastkraftwagen beim Passieren der Kuppe bereits mit der gesetzlich zulässigen Höchstgeschwindigkeit fährt. Zur Optimierung des Kraftstoffverbrauchs beim Passieren einer Kuppe ist es deshalb vorteilhaft, wenn die Fahrgeschwindigkeit kurz vor der Kuppe reduziert wird, so dass der Lastkraftwagen die Kuppe mit reduzierter Fahrgeschwindigkeit überquert und dann in der nachfolgenden Gefällestrecke wieder Geschwindigkeit aufholen kann.

Die Erfindung umfasst deshalb die allgemeine technische Lehre, dass zur Bestimmung der Fahrempfehlung mindestens eine verbrauchsrelevante Straßeneigenschaft einer Straße auf der bevorstehenden Fahrtroute des Kraftfahrzeugs ermittelt wird, wobei die verbrauchsrelevante Straßeneigenschaft den Kraftstoffverbrauch des Kraftfahrzeugs beeinflusst, welcher bekanntermaßen auch von den Fahrzeugeigenschaften wie zum Beispiel Fahrzeuggeschwindigkeit, Fahrzeuggewicht und Fahrwiderstand abhängt. Die Fahrempfehlung wird dann in Abhängigkeit von den verbrauchsrelevanten Straßeneigenschaften auf der bevorstehenden Fahrtroute und vorzugsweise auch in Abhängigkeit von den Fahrzeugeigenschaften des Kraftfahrzeugs festgelegt.

In dem vorstehend beschriebenen Beispiel des Überfahrens einer Kuppe durch einen Lastkraftwagen handelt es sich bei der verbrauchsrelevanten Straßeneigenschaft um die Neigung (Gefälle oder Steigung) der Straße auf der bevorstehenden Fahrtroute. Im Rahmen der Erfindung können jedoch auch andere verbrauchsrelevante Straßeneigenschaften berücksichtigt werden, wie beispielsweise gesetzliche Geschwindigkeitsbeschränkungen. Falls beispielsweise auf der bevorstehenden Fahrtroute in Kürze eine Geschwindigkeitsbegrenzung bevorsteht, so ist es zur Verbrauchsoptimierung sinnvoll, wenn das Kraftfahrzeug bereits vor Beginn der Geschwindigkeitsbegrenzung mit verminderter Antriebsleistung ausrollt.

Die Erfindung ist jedoch hinsichtlich der verbrauchsrelevanten Straßeneigenschaft nicht auf die Straßenneigung oder eine Geschwindigkeitsbegrenzung beschränkt, sondern kann auch andere Straßeneigenschaften berücksichtigen, die einen unmittelbaren oder mittelbaren Einfluss auf den Kraftstoffverbrauch haben.

In einem bevorzugten Ausführungsbeispiel der Erfindung erfolgt die Realisierung mittels eines Navigationssystems, wie es in vielen modernen Kraftfahrzeugen ohnehin schon vorhanden ist. Zum einen ermöglicht das Navigationssystem hierbei die Ermittlung der aktuellen Position des Kraftfahrzeugs, beispielsweise mittels eines GPS-Sensors (GPS: Global Positioning System). Darüber hinaus ist in einem Routenspeicher des Navigationssystems die bevorstehende Fahrtroute des Kraftfahrzeugs abgespeichert und kann deshalb bei der Optimierung des Kraftstoffverbrauchs berücksichtigt werden. Ferner sind in einer Navigationsdatenbank des Navigationssystems auch verbrauchsrelevante Straßeneigenschaften (z. B. Straßenneigung, gesetzliche Höchstgeschwindigkeit) gespeichert und können deshalb bei der Festlegung einer verbrauchsoptimierenden Fahrempfehlung berücksichtigt werden. Fahrzeugeigenschaften (Geschwindigkeit, Fahrzeuggewicht, Fahrwiderstand) sind in modernen Lastkraftwägen über das Fahrzeugsteuerungssystem bekannt und verfügbar. Die verbrauchsoptimierende Fahrempfehlung wird deshalb in Abhängigkeit von der Position des Kraftfahrzeugs und den verbrauchsrelevanten Straßeneigenschaften auf der bevorstehenden Fahrtroute des Kraftfahrzeugs und vorzugsweise auch in Abhängigkeit von den Fahrzeugeigenschaften festgelegt.

Es wurde bereits vorstehend beispielhaft erwähnt, dass beim Überfahren einer Kuppe vor der Kuppe eine Fahrempfehlung zur Verringerung der Antriebsleistung des Kraftfahrzeugs oder sogar zum antriebslosen Ausrollen des Kraftfahrzeugs abgegeben wird, wohingegen hinter der Kuppe eine Fahrempfehlung zur Erhöhung der Fahrgeschwindigkeit abgegeben wird, damit das Kraftfahrzeug dann wieder Geschwindigkeit aufholt.

Problematisch bei der Abgabe derartiger Fahrempfehlungen kann die mangelnde Akzeptanz des Fahrzeugführers sein, da bei ihm der Eindruck entstehen kann, dass er unnötig lange für eine bestimmte Strecke benötigt oder gar andere Verkehrsteilnehmer behindert. Es ist deshalb im Rahmen der Erfindung vorteilhaft, wenn die Fahrempfehlung für den Fahrzeugführer transparent gemacht wird, um die Akzeptanz des Fahrzeugführers zu erhöhen.

So weist die verbrauchsoptimierende Fahrempfehlung in der Regel eine vorbestimmte zeitliche Entwicklung auf, die von den Straßeneigenschaften auf der bevorstehenden Fahrtroute abhängen. Beim Überfahren einer Kuppe sollte beispielsweise der Fahrzeugführer das Kraftfahrzeug in der Steigung vor Erreichen der Kuppe für eine bestimmte Zeitdauer ausrollen lassen. Zur Erhöhung der Akzeptanz der Fahrempfehlung ist es deshalb vorteilhaft, wenn der Fahrzeugführer automatisch über die künftige zeitliche Entwicklung (z. B. Zeitdauer) der Fahrempfehlung und der daraus resultierenden Fahrgeschwindigkeit unterrichtet wird. Der Fahrzeugführer ist dann eher geneigt, der Fahrempfehlung zu folgen, wenn für ihn das zeitliche Ende der Fahrempfehlung und des Fahrzeugverhaltens absehbar ist.

Darüber hinaus lässt sich die Akzeptanz der Fahrempfehlung auch erhöhen, indem der Fahrzeugführer über den Grund (z.B. Ausrollen vor der Kuppe, Geschwindigkeit aufholen hinter der Kuppe) unterrichtet wird. Es ist deshalb ein wesentliches Merkmal der Erfindung, dass der Fahrzeugführer über den Grund der Fahrempfehlung unterrichtet wird, um die Akzeptanz der Fahrempfehlung zu erhöhen.

Hinsichtlich der Unterrichtung des Fahrzeugführers über die zeitliche Entwicklung und den Grund der Fahrempfehlung bestehen verschiedene Möglichkeiten. Beispielsweise kann der Fahrzeugführer optisch, akustisch oder haptisch unterrichtet werden.

Bei einer optischen Anzeige kann dem Fahrzeugführer beispielsweise ein Balkendiagramm angezeigt werden mit einem die gesamte Zeitdauer der Fahrempfehlung anzeigenden Balken und einem den aktuellen Zeitpunkt innerhalb der Zeitdauer anzeigenden Zeiger, wobei der Zeiger während der Zeitdauer der Fahrempfehlung entlang dem Balken verschoben wird. Auf diese Weise erhält der Fahrzeugführer schnell einen Überblick über die verbleibende Restdauer der Fahrempfehlung. Der Grund der Fahrempfehlung wird dagegen bei einer optischen Anzeige vorzugsweise in Wortform angezeigt, indem beispielsweise die Wörter "Ausrollen" oder "Aufholen" auf einem Bildschirm angezeigt werden.

Bei einer akustischen Anzeige kann dagegen beispielsweise ein anschwellendes oder abschwellendes akustischen Signal wiedergegeben werden, um den Fahrzeugführer über die Fahrempfehlung zu informieren.

Ferner besteht auch die Möglichkeit einer haptischen Unterrichtung des Fahrzeugführers über die Fahrempfehlung, beispielsweise durch eine anschwellende oder abschwellende Vibration.

Aus der vorstehenden Beschreibung ist bereits ersichtlich, dass es sich bei der verbrauchsoptimierenden Fahrempfehlung vorzugsweise um eine Fahrgeschwindigkeitsempfehlung handelt, insbesondere eine Empfehlung zur Verringerung oder zur Erhöhung der Fahrgeschwindigkeit. Es besteht jedoch alternativ auch die Möglichkeit, dass es sich bei der Fahrempfehlung um eine Antriebsleistungsempfehlung handelt, insbesondere eine Empfehlung zur Verringerung oder zur Erhöhung der Antriebsleistung des Kraftfahrzeugs, wobei die Antriebsleistung beispielsweise durch die Fahrpedalstellung bestimmt wird.

Weiterhin ist auch eine Fahrempfehlung zur Wahl eines geeigneteren Getriebeganges zur verbrauchsoptimierten Überwindung von Steigungen denkbar.

Ferner ist zu erwähnen, dass die Erfindung nicht auf ein neuartiges Betriebsverfahren für einen verbrauchsminderndes Fahrerassistenzsystem beschränkt ist, sondern auch ein derartiges neuartiges Fahrerassistenzsystem umfasst.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figuren 1A und 1: B ein Ausführungsbeispiel des erfindungsgemäßen Betriebsverfahrens für ein verbrauchsminderndes Fahrerassistenzsystem in Form eines Flussdiagramms,
- Figur 2: einen Bildschirminhalt mit einer Fahrempfehlung,
- Figur 3: eine schematische Darstellung der zeitlichen Abfolge verschiedener Fahrempfehlungen beim Passieren einer Kuppe, sowie
- Figur 4: ein Ausführungsbeispiel eines erfindungsgemäßen Fahrerassistenzsystems.

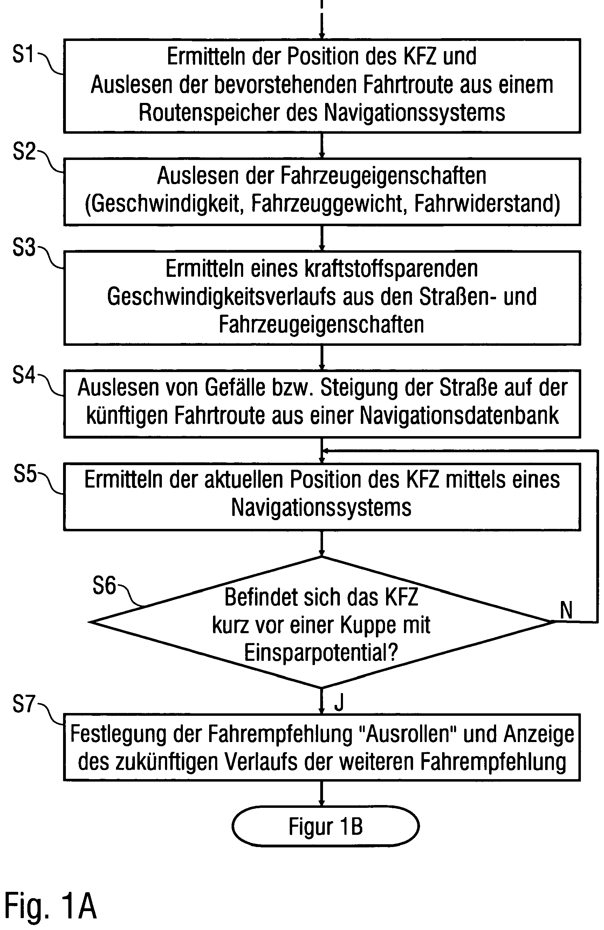

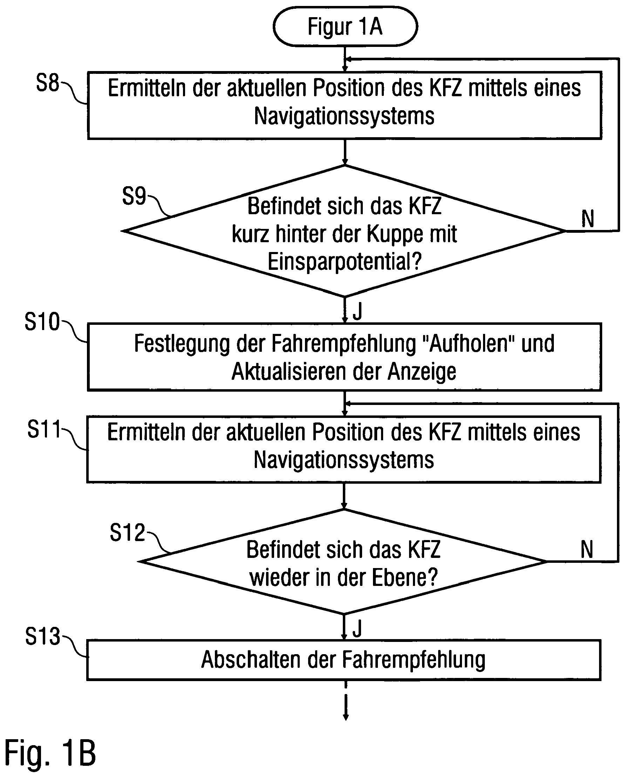

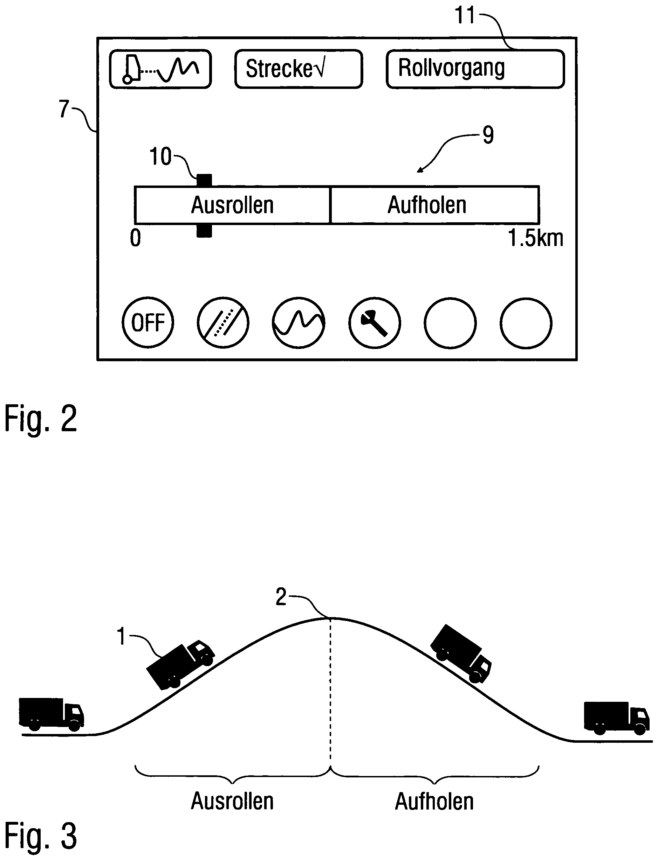

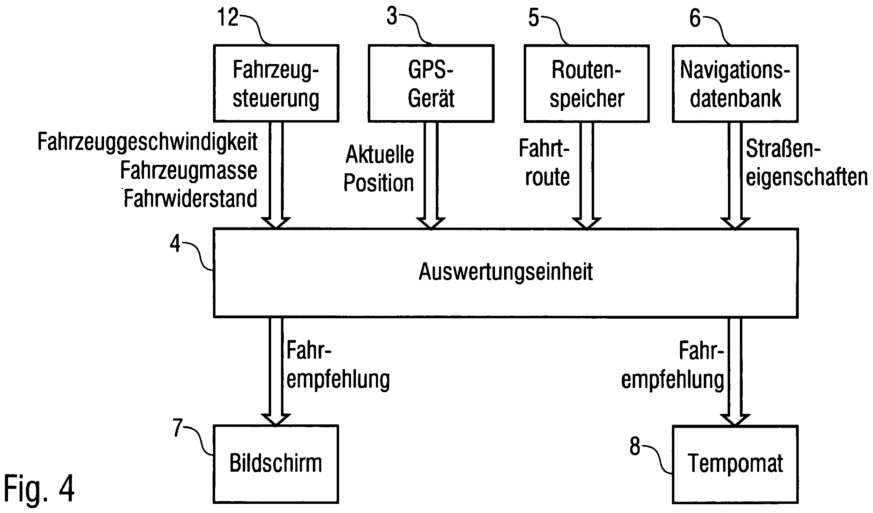

Im Folgenden wird nun das Flussdiagramm in den Figuren 1A und 1B beschrieben, wobei das Flussdiagramm das Betriebsverfahren des in Figur 4 schematisch dargestellten verbrauchsmindernden Fahrerassistenzsystems erläutert, wenn ein mit dem Fahrerassistenzsystem ausgerüsteter Lastkraftwagen 1 eine Kuppe 2 passiert, wie in Figur 3 schematisch dargestellt ist.

In einem ersten Schritt S1 ermittelt das Fahrerassistenzsystem zunächst mittels eines GPS-Geräts 3 die aktuelle Position des Lastkraftwagens 1. Weiterhin liest dann eine Auswertungseinheit 4 des Fahrerassistenzsystems aus einem Routenspeicher 5 eines Navigationssystems die bevorstehende Fahrtroute aus, um die bevorstehende Fahrtroute bei der Bestimmung einer verbrauchsoptimierenden Fahrempfehlung berücksichtigen zu können.

Danach werden im Schritt S2 die aktuell gültigen Fahrzeugeigenschaften aus der in jedem modernen Fahrzeug vorhandenen Fahrzeugsteuerung eingelesen und in Schritt S3 berücksichtigt, um zusammen mit den Straßeneigenschaften einen kraftstoffsparenden Geschwindigkeitsverlauf zu ermitteln.

In einem nächsten Schritt S4 liest die Auswertungseinheit 4 dann aus einer Navigationsdatenbank 6 verbrauchsrelevante Straßeneigenschaften aus, die bei der Bestimmung der verbrauchsoptimierenden Fahrempfehlung berücksichtigt werden können. In diesem konkreten Ausführungsbeispiel der Erfindung handelt es sich bei den verbrauchsrelevanten Straßeneigenschaften um die Straßenneigung, d.h. Winkel von Gefälle oder Steigung.

Anschließend wird in einem Schritt S5 wieder die aktuelle Position des Lastkraftwagens 1 mittels des GPS-Geräts 3 ermittelt und es wird dann in einem Schritt S6 in einer Schleife geprüft, ob sich der Lastkraftwagen 1 kurz vor der Kuppe 2, welche unter Berücksichtigung der Fahrzeugeigenschaften auch Einsparpotenzial aufweist, befindet.

Falls dies der Fall ist, so erfolgt in einem Schritt S7 eine Festlegung der Fahrempfehlung "Ausrollen", d.h. es wird dem Fahrzeugführer des Lastkraftwagens 1 empfohlen, den Lastkraftwagen 1 ausrollen zu lassen. Als wesentliches Merkmal der Erfindung ist auch in diesem Ausführungsbeispiel die Anzeige so gestaltet, dass der Fahrzeugführer den weiteren zukünftigen Verlauf der Fahrempfehlung und der Fahrzeuggeschwindigkeit erkennen und verstehen kann.

Anschließend wird dann in einem Schritt S8 wieder die aktuelle Position des Lastkraftwagens 1 ermittelt, bis in einem Schritt S9 festgestellt wird, dass sich der Lastkraftwagen 1 kurz hinter der Kuppe 2 befindet.

Falls dies der Fall ist, so erfolgt in einem Schritt S10 eine Festlegung der Fahrempfehlung "Aufholen", d.h. es wird dem Fahrzeugführer empfohlen, die Fahrgeschwindigkeit des Lastkraftwagens 1 unter Ausnutzung der Hangabtriebskraft auf der Gefällestrecke hinter der Kuppe 2 zu erhöhen.

In einem Schritt S11 wird dann wieder die aktuelle Position des Lastkraftwagens 1 ermittelt, bis in einem Schritt S12 festgestellt wird, dass sich der Lastkraftwagen 1 wieder in einer Ebene befindet.

Daraufhin wird dann in einem Schritt S13 die Fahrempfehlung abgeschaltet.

Die Auswertungseinheit 4 des Fahrerassistenzsystems kann die Fahrempfehlung auf einem Bildschirm 7 darstellen und - falls gewünscht - auch mittels einer Geschwindigkeitsregelanlage 8 ("Tempomat") automatisch umsetzen, sofern der Fahrzeugführer nicht interveniert.

Figur 2 zeigt ein Beispiel eines möglichen Bildschirminhalts des Bildschirms 7 mit einer Fahrempfehlung.

So zeigt der Bildschirm 7 in diesem Ausführungsbeispiel einen horizontal verlaufenden Balken 9, der die Dauer und die zukünftige Abfolge der verschiedenen Fahrempfehlungen ("Ausrollen" bzw. "Aufholen") beim Überfahren der Kuppe 2 verdeutlicht.

Weiterhin zeigt der Bildschirm 7 einen Zeiger 10, der entlang dem Balken 9 verschoben wird, so dass der Fahrzeugführer stets weiß, in welcher Phase er sich befindet.

Die eigentliche Fahrempfehlung und der Grund dafür wird hier dagegen in Wortform in einem Bildfenster 11 dargestellt.

Schließlich ist noch zu erwähnen, dass das Fahrerassistenzsystem mit einer Fahrzeugsteuerung 12 verbunden ist, von der das Fahrerassistenzsystem Fahrzeugeigenschaften (z.B. Fahrzeuggeschwindigkeit, Fahrzeugmasse, Fahrwiderstand) bezieht, so dass die Auswertungseinheit 4 auch diese Fahrzeugeigenschaften bei der Festlegung der Fahrempfehlung berücksichtigen kann.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den Merkmalen der im Bezug genommenen Ansprüche.

### Bezugszeichenliste

- 1: Lastkraftwagen
- 2: Kuppe
- 3: GPS-Gerät
- 4: Auswertungseinheit
- 5: Routenspeicher
- 6: Navigationsdatenbank
- 7: Bildschirm
- 8: Geschwindigkeitsregelanlage
- 9: Balken
- 10: Zeiger
- 11: Bildfenster
- 12: Fahrzeugsteuerung

## Patentansprüche

1. Betriebsverfahren für ein Fahrerassistenzsystem zur Unterstützung eines Fahrzeugführers eines Kraftfahrzeugs (1) bei einer Senkung eines Kraftstoffverbrauchs des Kraftfahrzeugs (1), wobei das Betriebsverfahren folgende Schritte aufweist:
- Bestimmung einer Fahrempfehlung (9-11) zur Senkung des Kraftstoffverbrauchs des Kraftfahrzeugs (1),
- Ermitteln mindestens einer verbrauchsrelevanten Straßeneigenschaft einer Straße auf der bevorstehenden Fahrtroute des Kraftfahrzeugs (1), wobei die verbrauchsrelevante Straßeneigenschaft den Kraftstoffverbrauch des Kraftfahrzeugs (1) beeinflusst,
- Bestimmung der Fahrempfehlung (9-11) in Abhängigkeit von der verbrauchsrelevanten Straßeneigenschaft auf der bevorstehenden Fahrtroute des Kraftfahrzeugs (1),
- Unterrichtung des Fahrzeugführers über die Fahrempfehlung (9-11),
**dadurch gekennzeichnet,**
- **dass** dem Fahrzeugführer ein Balkendiagramm angezeigt wird mit einem die gesamte Zeitdauer der Fahrempfehlung (9-11) anzeigenden Balken (9) und einem den aktuellen Zeitpunkt innerhalb der Zeitdauer anzeigenden Zeiger (10), wobei der Zeiger (10) während der Zeitdauer der Fahrempfehlung (9-11) entlang dem Balken (9) verschoben wird, und/oder
- **dass** der Fahrzeugführer über den Grund der Fahrempfehlung (9-11) oder über die künftige zeitliche Entwicklung der Fahrempfehlung (9-11) haptisch unterrichtet wird.

2. Betriebsverfahren nach Anspruch 1, wobei
- die verbrauchsrelevante Straßeneigenschaft ein Gefälle und eine Steigung der Straße auf der bevorstehenden Fahrtroute umfasst, und
- die verbrauchsrelevante Straßeneigenschaft eine Geschwindigkeitsbegrenzung der Straße auf der bevorstehenden Fahrtroute ist.

3. Betriebsverfahren nach einem der vorhergehenden Ansprüche, weiterhin mit folgenden Schritten:
- Ermitteln der aktuellen Position des Kraftfahrzeugs (1) mittels eines Navigationssystems (3), und
- Auslesen der bevorstehenden Fahrtroute des Kraftfahrzeugs (1) aus einem Routenspeicher (5) des Navigationssystems in Abhängigkeit von der aktuellen Position des Kraftfahrzeugs (1), und
- Auslesen der verbrauchsrelevanten Straßeneigenschaft auf der bevorstehenden Fahrtroute aus einer Navigationsdatenbank (6), und
- Festlegen der Fahrempfehlung (9-11) in Abhängigkeit von der Position des Kraftfahrzeugs (1) und den verbrauchsrelevanten Straßeneigenschaften auf der bevorstehenden Fahrtroute des Kraftfahrzeugs (1).

4. Betriebsverfahren nach einem der vorhergehenden Ansprüche, weiterhin mit folgenden Schritten:
- Überprüfen, ob auf der bevorstehenden Fahrtroute des Kraftfahrzeugs (1) eine Kuppe (2) liegt, über die das Kraftfahrzeug (1) fahren wird, und
- Festlegen einer Fahrempfehlung (9-11) zur Verringerung der Antriebsleistung des Kraftfahrzeugs (1) oder sogar zum antriebslosen Ausrollen des Kraftfahrzeugs (1), wenn sich das Kraftfahrzeug (1) kurz vor der Kuppe (2) befindet, und
- Festlegen einer Fahrempfehlung (9-11) zur Erhöhung der Fahrgeschwindigkeit, wenn das Kraftfahrzeug (1) die Kuppe (2) passiert hat und sich auf einer Gefällestrecke befindet.

5. Betriebsverfahren nach einem der vorhergehenden Ansprüche, wobei
- die Fahrempfehlung (9-11) eine vorbestimmte zeitliche Entwicklung hat, die von den Straßeneigenschaften auf der bevorstehenden Fahrtroute des Kraftfahrzeugs (1) bestimmt wird, und
- der Fahrzeugführer automatisch über die künftige zeitliche Entwicklung der Fahrempfehlung (9-11) unterrichtet wird.

6. Betriebsverfahren nach einem der vorhergehenden Ansprüche, wobei
- die Fahrempfehlung (9-11) zumindest einen Grund hat, der von der Straßeneigenschaft auf der bevorstehenden Fahrtroute bestimmt wird, und
- der Fahrzeugführer automatisch über den Grund der Fahrempfehlung (9-11) unterrichtet wird, und
- die Fahrempfehlung (9-11) einen der folgenden Gründe hat:
- Ausrollen des Kraftfahrzeugs (1) mit verminderter Antriebsleistung zum Ausnutzen eines Schwungs des Kraftfahrzeugs (1),
- Aufholen von während des Ausrollens verlorener Fahrgeschwindigkeit durch Betrieb des Kraftfahrzeugs (1) mit erhöhter Antriebsleistung,
- Aktueller Leistungszustand des Kraftfahrzeugs.

7. Betriebsverfahren nach einem der Ansprüche 5 oder 6, wobei
- der Fahrzeugführer über den Grund der Fahrempfehlung (9-11) und über die künftige zeitliche Entwicklung der Fahrempfehlung (9-11) optisch unterrichtet wird,
- der Grund für die Fahrempfehlung (9-11) dem Fahrzeugführer in Wortform angezeigt wird.

8. Betriebsverfahren nach einem der Ansprüche 5 bis 7, wobei der Fahrzeugführer über den Grund der Fahrempfehlung (9-11) und über die künftige zeitliche Entwicklung der Fahrempfehlung (9-11) akustisch unterrichtet wird.

9. Betriebsverfahren nach einem der vorhergehenden Ansprüche, wobei
- die Fahrempfehlung (9-11) eine Fahrgeschwindigkeitsempfehlung ist, oder
- die Fahrempfehlung (9-11) eine Antriebsleistungsempfehlung ist.

10. Betriebsverfahren nach einem der vorhergehenden Ansprüche, weiterhin mit folgendem Schritt:
automatische Umsetzung der Fahrempfehlung (9-11) durch das Kraftfahrzeug (1),

11. Betriebsverfahren nach einem der vorhergehenden Ansprüche, wobei
- Fahrzeugeigenschaften ermittelt werden,
- die Fahrempfehlung auch in Abhängigkeit von den ermittelten Fahrzeugeigenschaften festgelegt wird.

12. Fahrerassistenzsystem zur Unterstützung eines Fahrzeugführers eines Kraftfahrzeugs (1), wobei das Fahrerassistenzsystem eine Fahrempfehlung (9-11) zur Senkung des Kraftstoffverbrauchs des Kraftfahrzeugs (1) festlegt, wobei
- das Fahrerassistenzsystem mindestens eine verbrauchsrelevante Straßeneigenschaft einer Straße auf der bevorstehenden Fahrtroute des Kraftfahrzeugs (1) ermittelt, wobei die verbrauchsrelevante Straßeneigenschaft den Kraftstoffverbrauch des Kraftfahrzeugs (1) beeinflusst,
- das Fahrerassistenzsystem die Fahrempfehlung (9-11) in Abhängigkeit von der verbrauchsrelevanten Straßeneigenschaft auf der bevorstehenden Fahrtroute des Kraftfahrzeugs (1) festlegt,
- das Fahrerassistenzsystem die Fahrempfehlung dem Fahrzeugführer durch eine Anzeigeeinheit (7) anzeigt,
**dadurch gekennzeichnet,**
- **dass** die Anzeigeeinheit (7) dem Fahrzeugführer ein Balkendiagramm anzeigt mit einem die gesamte Zeitdauer der Fahrempfehlung (9-11) anzeigenden Balken (9) und einem den aktuellen Zeitpunkt innerhalb der Zeitdauer anzeigenden Zeiger (10), wobei der Zeiger (10) während der Zeitdauer der Fahrempfehlung (9-11) entlang dem Balken (9) verschoben wird, und/oder
- **dass** die Anzeigeeinheit (7) den Fahrzeugführer über den Grund der Fahrempfehlung (9-11) oder über die künftige zeitliche Entwicklung der Fahrempfehlung (9-11) haptisch unterrichtet.

13. Fahrerassistenzsystem nach Anspruch 12, weiterhin umfassend:
- ein Navigationssystem (3), zur Ermittlung der aktuellen Position des Kraftfahrzeugs (1), und
- einen Routenspeicher (5) zur Speicherung der Fahrtroute des Kraftfahrzeugs (1), und
- eine Navigationsdatenbank (6) zur Speicherung der verbrauchsrelevanten Straßeneigenschaft, und
- eine Auswertungseinheit (4), die die Fahrempfehlung (9-11) in Abhängigkeit von der aktuellen Position des Kraftfahrzeugs (1), der bevorstehenden Fahrtroute und der verbrauchsrelevanten Straßeneigenschaft auf der bevorstehenden Fahrtroute festlegt.

14. Fahrerassistenzsystem nach einem der Ansprüche 12 bis 13, weiterhin umfassend:
eine Geschwindigkeitsregelanlage (8) zur Regelung der Fahrgeschwindigkeit des Kraftfahrzeugs (1), wobei die Geschwindigkeitsregelanlage die Fahrempfehlung (9-11) automatisch umsetzt.

15. Kraftfahrzeug (1) mit einem Fahrerassistenzsystem nach einem der Ansprüche 12 bis 14.

## Claims

1. Operating method for a driver-assistance system for assisting a vehicle driver of a motor vehicle (1) in reducing the fuel consumption of the motor vehicle (1), wherein the operating method has the following steps:
- determining a driving recommendation (9-11) for reducing the fuel consumption of the motor vehicle (1),
- determining at least one consumption-relevant road property of a road on the route lying ahead of the motor vehicle (1), wherein the consumption-relevant road property influences the fuel consumption of the motor vehicle (1),
- determining the driving recommendation (9-11) as a function of the consumption-relevant road property on the route lying ahead of the motor vehicle (1), and
- informing the vehicle driver about the driving recommendation (9-11),
**characterized**
- **in that** a bar diagram is displayed to the vehicle driver with a bar (9) indicating the total duration of the driving recommendation (9-11) and a pointer (10) which indicates the current time within the duration, wherein during the driving recommendation (9-11) the pointer (10) is shifted along the bar (9), and/or
- **in that** the vehicle driver is informed haptically about the reason for the driving recommendation (9-11) or about the future development of the driving recommendation (9-11) over time.

2. Operating method according to Claim 1, wherein
- the consumption-relevant road property comprises a negative gradient and a positive gradient of the road on the route lying ahead, and
- the consumption-relevant road property is a speed limit of the road on the route lying ahead.

3. Operating method according to one of the preceding claims, also having the following steps:
- determining the current position of the motor vehicle (1) by means of a navigation system (3), and
- reading out the route lying ahead for the motor vehicle (1) from a route memory (5) of the navigation system as a function of the current position of the motor vehicle (1), and
- reading out the consumption-relevant road property on the route lying ahead from a navigation data base (6), and
- defining the driving recommendation (9-11) as a function of the position of the motor vehicle (1) and the consumption-relevant road properties on the route lying ahead for the motor vehicle (1).

4. Operating method according to one of the preceding claims, also having the following steps:
- checking whether on the route lying ahead for the motor vehicle (1) there is a crest of a hill (2) over which the motor vehicle (1) will drive, and
- defining a driving recommendation (9-11) for reducing the driving power of the motor vehicle (1) or even for driverless coasting of the motor vehicle (1) to a standstill if the motor vehicle (1) is located just before the crest of the hill (2), and
- defining a driving recommendation (9-11) for increasing the velocity if the motor vehicle (1) has passed the crest of the hill (2) and is located on a downhill part of a route.

5. Operating method according to one of the preceding claims, wherein
- the driving recommendation (9-11) has a predetermined development over time which is determined by the road properties on the route lying ahead of the motor vehicle (1), and
- the vehicle driver is informed automatically about the future development of the driving recommendation (9-11) over time.

6. Operating method according to one of the preceding claims, wherein
- the driving recommendation (9-11) has at least one reason which is determined by the road property on the route lying ahead, and
- the vehicle driver is informed automatically about the reason for the driving recommendation (9-11), and
- the driving recommendation (9-11) has one of the following reasons:
- coasting of the motor vehicle (1) to a standstill with reduced driving power in order to make use of the momentum of the motor vehicle (1),
- picking up the velocity lost during the coasting to a standstill, by operating the motor vehicle (1) with increased drive power, and
- current power condition of the motor vehicle.

7. Operating method according to one of Claims 5 and 6, wherein
- the vehicle driver is visually informed about the reason for the driving recommendation (9-11) and about the future development of the driving recommendation (9-11) over time, and
- the reason for the driving recommendation (9-11) is displayed to the vehicle driver in form of words.

8. Operating method according to one of Claims 5 to 7, wherein the vehicle driver is acoustically informed about the reason for the driving recommendation (9-11) and about the future development of the driving recommendation (9-11) over time.

9. Operating method according to one of the preceding claims, wherein
- the driving recommendation (9-11) is a velocity recommendation, or
- the driving recommendation (9-11) is a driving power recommendation.

10. Operating method according to one of the preceding claims, also having the following step:
automatic implementation of the driving recommendation (9-11) by the motor vehicle (1).

11. Operating method according to one of the preceding claims, wherein
- vehicle properties are determined, and
- the driving recommendation is also defined as a function of the determined vehicle properties.

12. Driver assistance system for assisting a vehicle driver of a motor vehicle (1), wherein the driver assistance system specifies a driving recommendation (9-11) for reducing the fuel consumption of the motor vehicle (1), wherein
- the driver assistance system determines at least one consumption-relevant road property of a road on the route lying ahead of the motor vehicle (1), wherein the consumption-relevant road property influences the fuel consumption of the motor vehicle (1),
- the driver assistance system specifies the driving recommendation (9-11) as a function of the consumption-relevant road property on the route lying ahead of the motor vehicle (1),
- the driver assistance system displays the driving recommendation to the vehicle driver by means of a display unit (7),
**characterized**
- **in that** the display unit (7) displays to the vehicle driver a bar diagram with a bar (9) indicating the total duration of the driving recommendation (9-11) and a pointer (10) which indicates the current time within the duration, wherein during the driving recommendation (9-11) the pointer (10) is shifted along the bar (9), and/or
- **in that** the display unit (7) informs the vehicle driver haptically about the reason for the driving recommendation (9-11) or about the future development of the driving recommendation (9-11) over time.

13. Driver assistance system according to Claim 12, also comprising:
- a navigation system (3) for determining the current position of the motor vehicle (1), and
- a route memory (5) for storing the route of the motor vehicle (1), and
- a navigation data base (6) for storing the consumption-relevant road property, and
- an evaluation unit (4), which specifies the driving recommendation (9-11) as a function of the current position of the motor vehicle (1), of the route lying ahead and of the consumption-relevant road property on the route lying ahead.

14. Driver assistance system according to one of Claims 12 to 13, also comprising:
a cruise control system (8) for controlling the velocity of the motor vehicle (1), wherein the cruise control system implements the driving recommendation (9-11) automatically.

15. Motor vehicle (1) having a driver assistance system according to one of Claims 12 to 14.

## Revendications

1. Procédé d'exploitation pour un système d'assistance au conducteur destiné à aider un conducteur d'un véhicule automobile (1) à diminuer une consommation en carburant du véhicule automobile (1), le procédé d'exploitation comprenant les étapes suivantes consistant à :
- déterminer une recommandation de conduite (9 à 11) pour diminuer la consommation en carburant du véhicule automobile (1),
- déterminer au moins une caractéristique de route en rapport avec la consommation d'une route du prochain itinéraire du véhicule automobile (1), la caractéristique de route en rapport avec la consommation affectant la consommation en carburant du véhicule automobile (1),
- déterminer la recommandation de conduite (9 à 11) en fonction de la caractéristique de route en rapport avec la consommation sur le prochain itinéraire du véhicule automobile (1),
- informer le conducteur de la recommandation de conduite (9 à 11),
**caractérisé en ce que**
- un histogramme est affiché pour le conducteur, comprenant une barre (9) indiquant la période totale de la recommandation de conduite (9 à 11) et un curseur (10) indiquant l'instant actuel dans la période, le curseur (10) se déplaçant le long de la barre (9) pendant la période de la recommandation de conduite (9 à 11), et/ou
- le conducteur est informé de manière haptique de la cause de la recommandation de conduite (9 à 11) ou de l'évolution future dans le temps de la recommandation de conduite (9 à 11).

2. Procédé d'exploitation selon la revendication 1, dans lequel
- la caractéristique de route en rapport avec la consommation comprend une descente et une montée de la route sur le prochain itinéraire, et
- la caractéristique de route en rapport avec la consommation est une limitation de vitesse de la route sur le prochain itinéraire.

3. Procédé d'exploitation selon l'une quelconque des revendications précédentes, comprenant en outre les étapes suivantes consistant à :
- déterminer la position actuelle du véhicule automobile (1) au moyen d'un système de navigation (3), et
- lire le prochain itinéraire du véhicule automobile (1) dans une mémoire de trajets (5) du système de navigation en fonction de la position actuelle du véhicule automobile (1), et
- lire la caractéristique de route en rapport avec la consommation sur le prochain itinéraire à partir d'une base de données de navigation (6), et
- établir la recommandation de conduite (9 à 11) en fonction de la position du véhicule automobile (1) et des caractéristiques de route en rapport avec la consommation sur le prochain itinéraire du véhicule automobile (1).

4. Procédé d'exploitation selon l'une quelconque des revendications précédentes, comprenant en outre les étapes suivantes consistant à :
- vérifier si sur le prochain itinéraire du véhicule automobile (1) il y a un sommet (2) par lequel passera le véhicule automobile (1), et
- établir une recommandation de conduite (9 à 11) pour diminuer la puissance d'entraînement du véhicule automobile (1), voire pour faire rouler le véhicule automobile (1) en roue libre sans entraînement lorsque le véhicule automobile (1) se trouve juste avant le sommet (2), et
- établir une recommandation de conduite (9 à 11) pour augmenter la vitesse de conduite si le véhicule automobile (1) a franchi le sommet (2) et se trouve sur un trajet de descente.

5. Procédé d'exploitation selon l'une quelconque des revendications précédentes, dans lequel
- la recommandation de conduite (9 à 11) présente une évolution dans le temps prédéterminée qui est déterminée par les caractéristiques de route du prochain itinéraire du véhicule automobile (1), et
- le conducteur est informé automatiquement de l'évolution dans le temps à venir de la recommandation de conduite (9 à 11).

6. Procédé d'exploitation selon l'une quelconque des revendications précédentes, dans lequel
- la recommandation de conduite (9 à 11) a au moins une cause qui est déterminée par la caractéristique de route du prochain itinéraire, et
- le conducteur est informé automatiquement de la cause de la recommandation de conduite (9 à 11), et
- la recommandation de conduite (9 à 11) a l'une des causes suivantes :
- le véhicule automobile (1) roule en roue libre avec une puissance d'entraînement diminuée pour exploiter l'élan du véhicule automobile (1),
- la récupération de la vitesse de conduite perdue pendant le déplacement en roue libre par l'exploitation du véhicule automobile (1) avec une puissance d'entraînement augmentée,
- l'état de puissance actuel du véhicule automobile.

7. Procédé d'exploitation selon l'une quelconque des revendications 5 ou 6, dans lequel
- le conducteur est informé de manière optique de la cause de la recommandation de conduite (9 à 11) et de l'évolution dans le temps à venir de la recommandation de conduite (9 à 11),
- la cause de la recommandation de conduite (9 à 11) est affichée pour le conducteur sous forme de texte.

8. Procédé d'exploitation selon l'une quelconque des revendications 5 à 7, dans lequel le conducteur est informé de manière acoustique de la cause de la recommandation de conduite (9 à 11) et de l'évolution dans le temps à venir de la recommandation de conduite (9 à 11) .

9. Procédé d'exploitation selon l'une quelconque des revendications précédentes, dans lequel
- la recommandation de conduite (9 à 11) est une recommandation de vitesse de conduite, ou
- la recommandation de conduite (9 à 11) est une recommandation de puissance d'entraînement.

10. Procédé d'exploitation selon l'une quelconque des revendications précédentes, comprenant en outre l'étape suivante :
la mise en œuvre automatique de la recommandation de conduite (9 à 11) par le véhicule automobile (1).

11. Procédé d'exploitation selon l'une quelconque des revendications précédentes, dans lequel
- des caractéristiques de véhicule sont déterminées,
- la recommandation de conduite est également établie en fonction des caractéristiques de véhicule déterminées.

12. Système d'assistance au conducteur, destiné à aider un conducteur d'un véhicule automobile (1), le système d'assistance au conducteur établissant une recommandation de conduite (9 à 11) pour diminuer la consommation en carburant du véhicule automobile (1), dans lequel
- le système d'assistance au conducteur détermine au moins une caractéristique de route en rapport avec la consommation d'une route sur le prochain itinéraire du véhicule automobile (1), la caractéristique de route en rapport avec la consommation affectant la consommation en carburant du véhicule automobile (1),
- le système d'assistance au conducteur établit la recommandation de conduite (9 à 11) en fonction de la caractéristique de route en rapport avec la consommation sur le prochain itinéraire du véhicule automobile (1),
- le système d'assistance au conducteur affiche la recommandation de conduite pour le conducteur à l'aide d'une unité d'affichage (7),
**caractérisé en ce que**
- l'unité d'affichage (7) affiche pour le conducteur un histogramme comprenant une barre (9) indiquant la période totale de la recommandation de conduite (9 à 11) et un curseur (10) indiquant l'instant actuel dans la période, le curseur (10) se déplaçant le long de la barre (9) pendant la période de la recommandation de conduite (9 à 11), et/ou
- l'unité d'affichage (7) informe le conducteur de manière haptique de la cause de la recommandation de conduite (9 à 11) ou de l'évolution dans le temps à venir de la recommandation de conduite (9 à 11).

13. Système d'assistance au conducteur selon la revendication 12, comprenant en outre :
- un système de navigation (3) destiné à déterminer la position actuelle du véhicule automobile (1), et
- une mémoire de trajets (5) pour stocker le trajet du véhicule automobile (1), et
- une base de données de navigation (6) pour stocker la caractéristique de route en rapport avec la consommation, et
- une unité d'évaluation (4) qui établit la recommandation de conduite (9 à 11) en fonction de la position actuelle du véhicule automobile (1) sur le prochain itinéraire et de la caractéristique de route en rapport avec la consommation sur le prochain itinéraire.

14. Système d'assistance au conducteur selon l'une quelconque des revendications 12 à 13, comprenant en outre : un régulateur de vitesse (8) pour réguler la vitesse de conduite du véhicule automobile (1), le régulateur de vitesse mettant en œuvre automatiquement la recommandation de conduite (9 à 11).

15. Véhicule automobile (1) comprenant un système d'assistance au conducteur selon l'une quelconque des revendications 12 à 14.
